# EUROPÄISCHE PATENTSCHRIFT

(11) **EP 2 455 259 B1**
(45) Veröffentlichungstag und Bekanntmachung des Hinweises auf die Patenterteilung: **02.01.2013**
(21) Anmeldenummer: 10192002.3
(22) Anmeldetag: 22.11.2010
(51) Int. Cl.: B60R 1/06, B29C 41/20

(54) **Verkleidung einer Außenrückblickspiegelanordnung**
Cladding of an external rear view mirror assembly
Habillage d'un agencement de rétroviseur extérieur

(43) Veröffentlichungstag der Anmeldung: 23.05.2012
(73) Patentinhaber: SMR Patents S.à.r.l., 1653 Luxembourg (LU)
(72) Erfinder: Serve, Gregor, 71522, Stuttgart (DE); Hein, Peter, 73770, Denkendorf (DE)
(74) Vertreter: Weber-Bruls, Dorothée

(56) Entgegenhaltungen:
- EP-A1- 0 353 475
- EP-A2- 0 863 050
- DE-C1- 4 138 934
- US-A- 5 942 324
- US-A1- 2001 055 214
- US-B1- 6 419 300

## Beschreibung

Die Erfindung betrifft eine Verkleidung einer Außenrückblickspiegelanordnung für Kraftfahrzeuge gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Außenrückblickspiegel umfasst ein Außenrückblickspiegelgehäuse, welches unter anderem einen dem Spiegelfuß zugeordneten Grundträger beherbergt, einen solchen umfasst, oder von einem solchen umfasst wird.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Spiegelfuß und Grundträger können als Druckgussteile beispielsweise aus dem selben Werkstoff hergestellt sein.

Auf dem Grundträger kann eine beispielsweise elektromotorisch betätigbare Verstellanordnung für ein Spiegelglas angeordnet sein. Die Verstellanordnung wirkt auf eine Trägerplatte ein, auf der das Spiegelglas angeordnet ist. Beispielsweise kann das Spiegelglas mittels einer Rast- und/oder Klebeverbindung auf der Trägerplatte montiert sein. Die Trägerplatte kann an der Verstellanordnung und/oder an dem Grundträger geführt und/oder gelagert sein. Der Begriff Trägerplatte bezeichnet hierbei einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas beispielsweise mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann darüber hinaus eine Wiederholblinkleuchte, ein beheizbares Spiegelglas, ein elektrochromatisch abblendbares Spiegelglas, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Außenrückblickspiegel wenigstens einen Sensor zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen und/oder z.B. elektrochromatisch abzublenden.

Beispielsweise um die Montage der verschiedenen, zumindest zum Teil im Inneren des Außenrückblickspiegelgehäuses beherbergten Bauteile, Bauteilgruppen sowie gegebenenfalls deren elektrische Verbindungen untereinander und/oder mit einem kraftfahrzeugseitig untergebrachten Steuergerät zu vereinfachen, kann das Außenrückblickspiegelgehäuse zumindest zweiteilig ausgeführt sein. Ein erstes Gehäuseteil bildet beispielsweise den Gehäuseboden, ein zweites Gehäuseteil beispielsweise den Gehäusedeckel. Eines der beiden Gehäuseteile kann dabei eine um die Öffnung für das Spiegelglas herumliegende Gehäusepartie mit die Öffnung umgebenden Wandungen umfassen. Ebenso ist denkbar, dass diese Gehäusepartie durch ein drittes Gehäuseteil in Form eines separaten Rahmens gebildet wird.

Die gegebenenfalls vorgesehene Spiegelfußabdeckung kann ebenfalls ein- oder mehrteilig ausgeführt sein.

Zumindest das ein- oder mehrteilige Außenrückblickspiegelgehäuse sowie die gegebenenfalls vorgesehene ein- oder mehrteilige Spiegelfußabdeckung bilden eine Verkleidung der Außenrückblickspiegelanordnung, welche aus zumindest zwei miteinander verbundenen Verkleidungsteilen besteht. Dabei bilden beispielsweise zumindest das wenigstens eine Gehäuseteil des Außenrückblickspiegelgehäuses und das wenigstens eine Abdeckungsteil der gegebenenfalls vorgesehenen Spiegelfußabdeckung die miteinander verbundenen Verkleidungsteile der Verkleidung der Außenrückblickspiegelanordnung.

Zumindest ein weiteres Verkleidungsteil kann mindestens eine in die Außenkontur der Außenrückblickspiegelanordnung beispielsweise bündig eingefügte Abdeckung sein. Hierbei kann es sich um mindestens eine Abdeckung handeln, die zum Schutz zumindest einer zumindest zum Teil im Außenrückblickspiegelgehäuse und/oder in der Spiegelfußabdeckung beherbergten elektrischen Komponente beispielsweise vor Witterungseinflüssen vorgesehen sein kann. Eine Lichtscheibe einer im Außenrückblickspiegel angeordneten Wiederholblinkleuchte stellt beispielsweise eine solche Abdeckung bzw. ein solches Verkleidungsteil dar.

Auch kann eine solche Abdeckung Teil einer oder mehrerer elektrischer Komponenten sein oder von diesen umfasst werden. Dadurch können auch eine oder mehrere elektrische Komponenten der Außenrückblickspiegelanordnung ebenfalls zumindest zum Teil ein oder mehrere Verkleidungsteile der Verkleidung bilden.

Beispiele von elektrischen Komponenten, welche zumindest zum Teil ein Verkleidungsteil bilden können oder durch eine z.B. bündig in die Außenkontur einer Außenrückblickspiegelanordnung eingefügte Abdeckung z.B. gegen Witterungseinflüsse geschützt sein können sind:
- eine Wiederholblinkleuchte,
- eine Einstiegsleuchte,
- ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen,
- einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden.

Je nachdem, ob die jeweilige Abdeckung und/oder die jeweilige elektrische Komponente im Außenrückblickspiegelgehäuse oder in der Spiegelfußabdeckung untergebracht ist, bildet diese ein Verkleidungsteil des Außenrückblickspiegelgehäuses bzw. der Spiegelfußabdeckung.

Um eine einfache Montage zu gewährleisten, können jeweils die Verkleidungsteile des Außenrückblickspiegelgehäuses und/oder jeweils die Verkleidungsteile der Spiegelfußabdeckung durch unverdrehbare, lösbare oder unlösbare, feste Verbindungen, beispielsweise durch Rastverbindungen miteinander verbunden sein. Zumindest benachbarte Verkleidungsteile berühren dabei einander an einer oder mehreren, punkt- und/oder linienförmigen und/oder flächigen Kontaktstellen.

Eine oder mehrere Kontaktstellen können beispielsweise eine oder mehrere, die Gehäuseteile zueinander ausrichtende Anlageflächen bilden. Beispielsweise kann die gesamte Kontur, entlang welcher zwei Verkleidungsteile einander berühren, eine Anlagefläche bilden. An zwei Verkleidungsteilen vorgesehene Anschläge, Laschen, Hintergreifungen und dergleichen können ausgehend von entlang einer Geraden liegender Anlageflächen außerdem vorgesehen sein, um scharnierartig zusammenzuwirken, so dass die zwei Verkleidungsteile um die Scharnierachse aufeinander geklappt werden können. Beispielsweise gegenüber der Scharnierachse können eine oder mehrere Rast- Schraub- oder Nietverbindungen vorgesehen sein, welche z.B. gemeinsam mit den Anlageflächen die beiden Verkleidungsteile fest miteinander verbinden. Alternativ oder zusätzlich können auch andere unverdrehbare, feste Verbindungen zwischen zwei oder mehreren Verkleidungsteilen vorgesehen sein, beispielsweise Schraub- und/oder Nietverbindungen.

Bei der Verbindung zwischen dem Außenrückblickspiegelgehäuse und der gegebenenfalls vorgesehenen Spiegelfußabdeckung handelt es sich demgegenüber um eine um die Gelenkachse schwenkbare, gelenkige Verbindung. Diese gelenkige Verbindung kann beispielsweise einen entlang der Gelenkachse verlaufenden, beispielsweise auf einer ersten Gelenkpfanne aufstehenden Zapfen und eine den Zapfen aufnehmende, beispielsweise in eine zweite Gelenkpfanne eingelassene Lageröffnung umfassen. Der Zapfen und die Lageröffnung können dabei einander gegenüberliegend am Grundträger und am Spiegelfuß vorgesehen sein, wobei die Wahl, ob der Zapfen am Grundträger oder am Spiegelfuß und die Lageröffnung am entsprechend gegenüberliegenden Teil vorgesehen ist, grundsätzlich frei ist. Die über die gelenkige Verbindung miteinander verbundenen Verkleidungsteile können der gelenkigen Verbindung zugeordnete Oberflächenpartien aufweisen und/oder Oberflächenpartien aufweisen, welche innerhalb desjenigen Bereichs der Verbindung angeordnet sind, in dem die miteinander verbundenen Verbindungsteile in unmittelbarem Kontakt zueinander stehen. Diese Oberflächenpartien können einander zumindest zeitweise und zumindest teilweise berühren und bilden so Kontaktstellen zwischen den über die gelenkige Verbindung hinweg und/oder darüber hinaus miteinander verbundenen Verkleidungsteile.

Unabhängig davon, ob es sich um eine unverdrehbare, feste Verbindung oder um eine gelenkige Verbindung zwischen zwei oder mehreren Verkleidungsteilen handelt, ist den Verbindungen gemein, dass sie punkt- und/oder linienförmige und/oder flächige Kontaktstellen aufweisen, an denen die Verkleidungsteile einander berühren. Umfasst eine Verbindung eine Rastverbindung, kann sich zumindest eine Kontaktstelle zwischen den einander berührenden, korrespondierenden Rastelementen der Rastverbindung befinden.

Nunmehr werden im Automobilbereich sehr hohe Anforderungen in Bezug auf die Qualität der Oberflächen von Verkleidungen gelegt. Gleichzeitig sollen die Herstellungs- und Montagekosten gering sein.

Um diese Anforderungen zu erfüllen, ist bekannt, Oberflächen von Verkleidungen hochglänzend auszuführen. Dadurch werden nachfolgende Oberflächenbehandlungen, wie etwa Lackierarbeiten oder solche vorbereitende Behandlungen, stark vereinfacht. Gegebenenfalls kann auf eine nachfolgende Oberflächenbehandlung ganz verzichtet werden.

US 20010055214 D1 beschreibt einen Außenspiegel dessen Gehäuse aus einem transparenten oder halbdurchlässigen Material hergestellt wird. Dieser Herstellungsprozess ist dabei Kunststoffspritzguss. In einem nächsten Schritt wird eine Beschichtung aufgebracht. Die Beschichtung erfolgt durch Auftragen, Aufsprühen oder durch Vakuumabscheidung. Diese Schicht 6 auf dem Gehäuse 4 ist lichtundurchlässig. Die Herstellung ist nicht in einem Kunststoffspritzgusswerkzeug möglich.
US6419300 zeigt eine Lösung, in der die Verkleidungen nicht mit Mehrkomponenten-Spritzgussverfahren hergestellt werden, sondern durch Aufbringen einer Folie. Die Folie 18 besteht aus mehreren Lagen an Materialien und wird als Film fertig erworben und auf das Gehäuse aufgebracht.
Um bei einfacher und kostengünstiger Herstellung Beeinträchtigungen im Aussehen des Kunststoffs einer Verkleidung einer Außenrückblickspiegelanordnung zu vermeiden, ist durch gattungsgemäße EP 0 863 050 B1 bekannt, ein Verkleidungsteil mit einem eine Außenschicht bildenden Überzug aus lichtbeständigem und transparentem Kunststoff zu versehen. Dadurch kann das Verkleidungsteil selbst aus einem kostengünstigen und beispielsweise eingefärbten Kunststoff gefertigt werden, so dass die Farbe des Verkleidungsteils an die Kraftfahrzeugfarbe angepasst werden kann. Der Überzug verhindert, dass der Kunststoff des Verkleidungsteils Farbveränderungen erfährt. Für den Überzug kommt beispielsweise Polycarbonat, besonders bevorzugt hochglänzendes PMMA zum Einsatz. Für eine einfache Herstellung sowie ein einwandfreies Aussehen beispielsweise bei einem mehrteiligen Außenrückblickspiegelgehäuse und/oder einer mehrteiligen Spiegelfußabdeckung erstreckt sich der Überzug bis in die Innenseite des Verkleidungsteils.

Durch US 5,942,324 ist darüber hinaus bekannt, dass ein solcher Überzug einen Brechungsindex zwischen 1,35 und 1,67 aufweist und mit Zuschlägen versehen sein kann, beispielsweise um die Kratz- und Schlagfestigkeit zu erhöhen. Auch können Zuschläge vorgesehen sein, welche einen Metalliceffekt der Farbe des darunter liegenden Kunststoffs erzeugen.

Nachteilig an mit derartigen, insbesondere hochglänzenden Überzügen versehenen Verkleidungen ist eine den hohen Qualitätsanforderungen im Automobilbereich nicht entsprechende Geräuschentwicklung an den Kontaktstellen zwischen den Verkleidungsteilen. Diese Geräuschentwicklungen machen sich durch Knarz- und/oder Quietsch- und/oder Mahlgeräusche bemerkbar, welche beispielsweise bei normalen Erschütterungen im Betrieb eines Kraftfahrzeugs auftreten. Bei die Spiegelfußabdeckung und das Außenrückblickspiegelgehäuse umfassenden Verkleidungen tritt die Geräuschentwicklung darüber hinaus beim Verschwenken des Außenrückblickspiegels gegenüber dem Spiegelfuß um die Gelenkachse aus der Betriebsstellung in die Anklappstellung und umgekehrt auf.

Eine Aufgabe der Erfindung ist die Schaffung einer Verkleidung einer Außenrückblickspiegelanordnung für ein Kraftfahrzeug, welche einerseits den hohen qualitativen Anforderungen auch im Hinblick auf eine vorzugsweise hochglänzende, veredelte Oberfläche im Automobilbereich nachkommt, und andererseits die hohen qualitativen Anforderungen in Bezug auf eine geringe Geräuschentwicklung erfüllt. Gleichzeitig soll die Verkleidung einfach herzustellen und ebenso einfach zu montieren sein.

Die Aufgabe wird gelöst durch die Merkmale des unabhängigen Anspruchs 1.

Demnach ist eine Verkleidung einer Außenrückblickspiegelanordnung für Kraftfahrzeuge vorgesehen, welche zumindest zweiteilig ausgeführt ist. Die zumindest zweiteilige Verkleidung besteht aus zumindest zwei miteinander verbundenen Verkleidungsteilen.

Zumindest zwei Verkleidungsteile berühren einander, so dass eine oder mehrere Kontaktstellen zwischen den über die wenigstens eine Kontaktstelle hinweg und/oder darüber hinaus miteinander verbundenen Verkleidungsteilen bestehen.

Zumindest ein Verkleidungsteil ist in Zwei- oder Mehrkomponenten-Spritzgusstechnik mit einem eine Außenschicht bildenden Überzug aus bevorzugt lichtbeständigem und vorzugsweise transparentem Kunststoff versehen.

Der Überzug kann sich bis in die Innenseite des Verkleidungsteils erstrecken.

Um an der mindestens einen Kontaktstelle während des Betriebs eines Kraftfahrzeugs z.B. Knarz-, Quietsch- und Mahlgeräusche zu verhindern, ist eine Freilassung zumindest einer wenigstens die mindestens eine Kontaktstelle umfassenden Oberflächenpartie wenigstens eines der über die wenigstens eine Kontaktstelle hinweg und/oder darüber hinaus miteinander verbundenen Verkleidungsteile von dem Überzug vorgesehen.

Die mindestens eine Kontaktstelle kann von einer unverdrehbaren, festen Verbindung und/oder einer gelenkigen Verbindung zwischen wenigstens zwei Verkleidungsteilen umfasst sein.

Zumindest eine Verbindung zwischen zwei oder mehreren Verkleidungsteilen kann eine Rastverbindung umfassen. Eine auch als Klipsverbindung oder als Schnappverbindungen bezeichnete Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind ein elastisch verformbares Rastmittel und eine Hintergreifung.

Wenigstens eine Kontaktstelle befindet sich dabei zwischen den korrespondierenden Rastelementen der Rastverbindung.

Der Kunststoff des Überzugs bildet besonders bevorzugt eine hochglänzende Oberfläche.

Vorzugsweise kommt für den Überzug Polycarbonat, besonders bevorzugt hochglänzendes Polymethylmethacrylat (PMMA) zum Einsatz.

Bei den über die wenigstens eine Kontaktstelle hinweg und/oder darüber hinaus miteinander verbundenen Verkleidungsteilen kann es sich um Gehäuseteile eines Außenrückblickspiegelgehäuses handeln.

Alternativ oder zusätzlich kann es sich bei den über die wenigstens eine Kontaktstelle hinweg und/oder darüber hinaus miteinander verbundenen Verkleidungsteilen um Abdeckungsteile einer Spiegelfußabdeckung handeln.

Bei den über die wenigstens eine Kontaktstelle hinweg und/oder darüber hinaus miteinander verbundenen Verkleidungsteilen kann es sich außerdem um mindestens ein Gehäuseteil eines Außenrückblickspiegelgehäuses und um mindestens eine z.B. bündig in die Außenkontur des Außenrückblickspiegelgehäuses eingefügte Abdeckung wenigstens einer im Außenrückblickspiegel beherbergten elektrischen Komponente handeln.

Bei den über die wenigstens eine Kontaktstelle hinweg und/oder darüber hinaus miteinander verbundenen Verkleidungsteilen kann es sich darüber hinaus um mindestens ein Gehäuseteil einer Spiegelfußabdeckung und um mindestens eine z.B. bündig in die Außenkontur der Spiegelfußabdeckung eingefügte Abdeckung wenigstens einer im Außenrückblickspiegel beherbergten elektrischen Komponente handeln.

Die Abdeckung kann Teil der elektrischen Komponente sein bzw. von der elektrischen Komponente umfasst werden. Beispielsweise kann es sich bei der Abdeckung um eine Lichtscheibe einer Wiederholblinkleuchte und/oder einer Ausstiegsleuchte zur Umfeldbeleuchtung handeln.

Besonders bevorzugt handelt es sich bei den über die wenigstens eine Kontaktstelle hinweg und/oder darüber hinaus miteinander verbundenen Verkleidungsteilen um wenigstens ein Gehäuseteil eines Außenrückblickspiegelgehäuses und um wenigstens ein Abdeckungsteil einer Spiegelfußabdeckung. Die beiden Verkleidungsteile sind dabei um diejenige Gelenkachse schwenkbar gelenkig miteinander verbunden, um welche der Außenrückblickspiegel der Außenrückblickspiegelanordnung gegenüber dem Spiegelfuß aus einer Betriebsstellung in eine Anklappstellung und umgekehrt verschwenkbar ist.

Die mindestens eine Kontaktstelle kann darüber hinaus wenigstens eine Anlagefläche bilden, eine solche umfassen, oder von einer solchen umfasst werden.

Beispielsweise kann es sich bei der Anlagefläche um eine scharnierartige Verbindung zwischen zwei Verkleidungsteilen handeln, wobei die Verkleidungsteile zu deren gemeinsamer Verbindung miteinander um eine Scharnierachse aufeinander geklappt und an zumindest einer von der Scharnierachse verschiedenen Stelle beispielsweise durch eine Rast-, Schraub-Niet-, Schweiß- oder Klebeverbindung miteinander verbunden sind.

Die Verkleidung kann darüber hinaus ein oder mehrere der Eingangs beschriebenen Merkmale aufweisen.

Außerdem kann eine Außenrückblickspiegelanordnung, für die eine zuvor beschriebene Verkleidung vorgesehen sein kann, ein oder mehrere der Eingangs beschriebenen Merkmale aufweisen.

Vorteile der Erfindung gegenüber dem Stand der Technik ergeben sich unter anderem durch eine besonders einfache Herstellung, welche aufwändige Nacharbeiten, z.B. von nach dem Stand der Technik Knarz-, Quietsch und Mahlgeräusche erzeugenden Kontaktstellen, unnötig macht. Durch den Verzicht auf eine hochglänzende Beschichtung, zumindest unmittelbar an den Kontaktstellen, kommt es hier nicht zu der als qualitätsmindernd empfundenen Geräuschentwicklung. Gleichzeitig kann der insbesondere in der Außenansicht als qualitativ hochwertig empfundene Überzug beibehalten werden, so dass gleichzeitig ein qualitativ hochwertiger Eindruck der Außenansicht erhalten wird.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: einen Querschnitt durch einen Außenrückblickspiegel einer Außenrückblickspiegelanordnung.
- Fig. 2: eine vergrößerte Ansicht des in Fig. 1 mit A markierten Details.
- Fig. 3: eine vergrößerte Ansicht des in Fig. 1 mit B markierten Details.

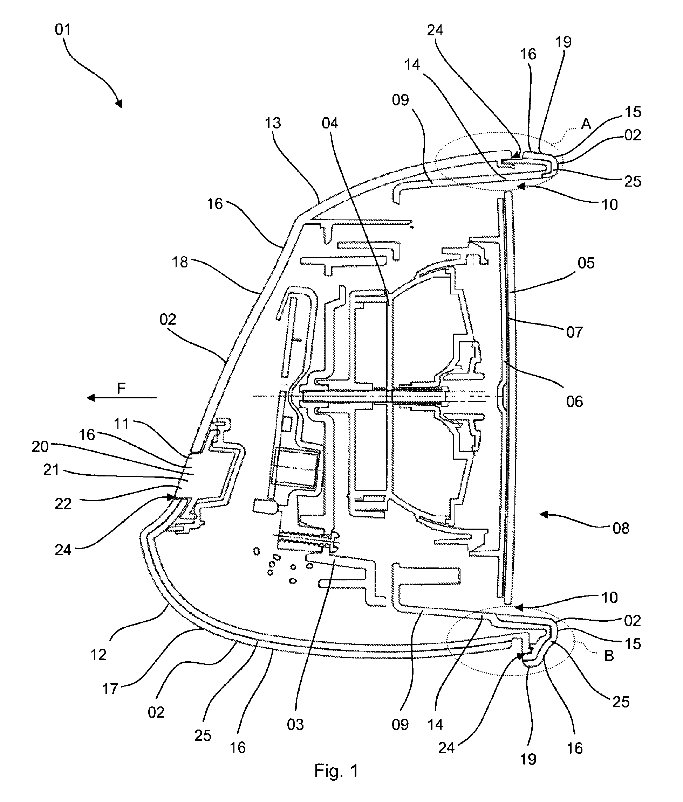

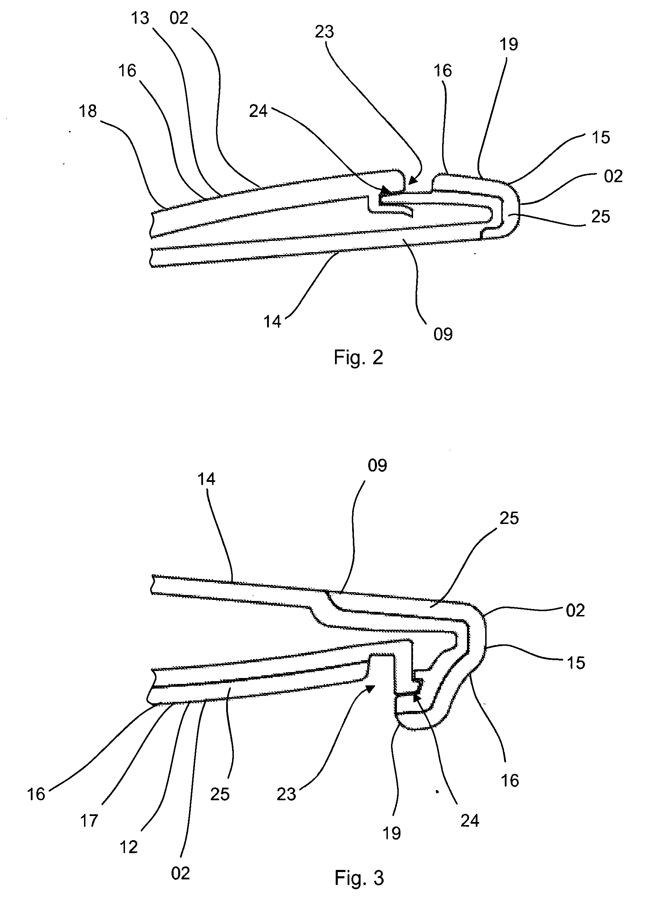

Ein in den Fig. 1 bis 3 ganz oder zum Teil dargestellter Außenrückblickspiegel 01 einer Außenrückblickspiegelanordnung für ein Kraftfahrzeug umfasst ein Außenrückblickspiegelgehäuse 02, welches unter anderem einen einem an dem Kraftfahrzeug angeordneten Spiegelfuß zugeordneten Grundträger 03 beherbergen kann. Der nicht dargestellte Spiegelfuß kann mittels einer Spiegelfußabdeckung verkleidet sein. Der Außenrückblickspiegel 01 ist an dem Spiegelfuß angeordnet.

Auf dem Grundträger 03 kann eine beispielsweise elektromotorisch betätigbare Verstellanordnung 04 für ein Spiegelglas 05 angeordnet sein. Die Verstellanordnung 04 wirkt auf eine Trägerplatte 06 ein, auf der das Spiegelglas 05 angeordnet ist. Beispielsweise kann das Spiegelglas 05 mittels einer Rast-und/oder Klebeverbindung 07 auf der Trägerplatte 06 montiert sein. Die Trägerplatte 06 kann an der Verstellanordnung 04 und/oder an dem Grundträger 03 geführt und/oder gelagert sein.

Bei der Trägerplatte 06 handelt es sich um einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas 05 beispielsweise mittels einer Klebeverbindung 07 oder durch Einklipsen z.B. hinter am Umfang der Trägerfläche hervorstehende und vom Umfang aus gesehen nach Innen zur Mitte der Trägerfläche hin kragende Rastmittel zu befestigen.

Der Grundträger 03 ist gelenkig mit dem Spiegelfuß verbunden, so dass der Außenrückblickspiegel 01 gegenüber dem Spiegelfuß aus einer Betriebsstellung in eine Anklappstellung und umgekehrt um eine Gelenkachse verschwenkbar ist.

Das Außenrückblickspiegelgehäuse 02 weist auf seiner in Betriebsstellung der durch den Pfeil F angedeuteten Fahrtrichtung des Kraftfahrzeugs abgewandten Rückseite eine Öffnung 08 auf, durch welche hindurch das Spiegelglas 05 sichtbar ist bzw. in welcher das Spiegelglas 05 angeordnet ist. Um eine Verstellbarkeit des Spiegelglases 05 zu gewährleisten, ist allseitig zwischen Spiegelglas 05 bzw. Trägerplatte 06 und den die Öffnung 08 umgebenden Wandungen 09 des Außenrückblickspiegelgehäuses 02 ein Abstand eingehalten, so dass sich um das Spiegelglas 05 umlaufend ein Spalt 10 zu den die Öffnung 08 umgebenden Wandungen 09 des Außenrückblickspiegelgehäuses 02 ergibt.

Der Außenrückblickspiegel 01 kann eine Wiederholblinkleuchte 11 aufweisen. Alternativ oder zusätzlich kann der Außenrückblickspiegel 01 eine Ausstiegsund/oder Umfeldbeleuchtung, ein beheizbares Spiegelglas 05, ein elektrochromatisch abblendbares Spiegelglas 05, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Darüber hinaus kann der Außenrückblickspiegel 01 wenigstens einen Sensor zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas 05 automatisch zu beheizen und/oder z.B. elektrochromatisch abzublenden.

Das Außenrückblickspiegelgehäuse 02 kann zwei- oder mehrteilig ausgeführt sein, beispielsweise um die in ihm beherbergten Bauteile, Bauteilgruppen sowie gegebenenfalls deren elektrische Verbindungen untereinander und/oder beispielsweise mit einem kraftfahrzeugseitig untergebrachten Steuergerät zu vereinfachen. Ein erstes Gehäuseteil 12 bildet beispielsweise den Gehäuseboden, ein zweites Gehäuseteil 13 beispielsweise den Gehäusedeckel. Eines der beiden Gehäuseteile 12, 13 kann dabei eine um die Öffnung 08 für das Spiegelglas 05 herumliegende Gehäusepartie 14 mit die Öffnung 08 umgebenden Wandungen 09 umfassen. Ebenso ist denkbar, dass diese Gehäusepartie 14 durch ein drittes Gehäuseteil 15 in Form eines separaten Rahmens gebildet wird.

Die gegebenenfalls vorgesehene Spiegelfußabdeckung des nicht dargestellten Spiegelfußes kann ebenfalls ein- oder mehrteilig ausgeführt sein.

Zumindest das ein- oder mehrteilige Außenrückblickspiegelgehäuse 02 sowie die gegebenenfalls vorgesehene ein- oder mehrteilige Spiegelfußabdeckung können eine Verkleidung 16 der Außenrückblickspiegelanordnung bilden. Die Verkleidung 16 besteht aus zumindest zwei miteinander verbundenen Verkleidungsteilen 17, 18, 19, 20.

Dabei kann neben dem durch den Gehäuseboden bzw. das erste Gehäuseteil 12 gebildeten Verkleidungsteil 17, dem durch den Gehäusedeckel bzw. das zweite Gehäuseteil 13 gebildeten Verkleidungsteil 18, den durch den gegebenenfalls vorgesehenen Rahmen bzw. das dritte Gehäuseteil 15 gebildeten Verkleidungsteil 19 mindestens eine beispielsweise in die Außenkontur des Außenrückblickspiegels 01 der Außenrückblickspiegelanordnung beispielsweise bündig eingefügte Abdeckung 21 ein weiteres Verkleidungsteil 20 bilden. Die Abdeckung 21 kann beispielsweise zum Schutz zumindest einer zumindest zum Teil im Außenrückblickspiegelgehäuse 02 beherbergten elektrischen Komponente beispielsweise vor Witterungseinflüssen vorgesehen sein.

Darüber hinaus kann die Abdeckung 21 Teil einer oder mehrerer elektrischer Komponenten sein bzw. von mindestens einer solchen umfasst werden.

Bei der Abdeckung 21 in Fig. 1 handelt es sich beispielsweise um eine Lichtscheibe 22 der zumindest zum Teil im Außenrückblickspiegelgehäuse 02 des Außenrückblickspiegels 01 beherbergten Wiederholblinkleuchte 11.

Zumindest benachbarte Verkleidungsteile 17, 18, 19, 20 berühren einander an einer oder mehreren, punkt- und/oder linienförmigen und/oder flächigen Kontaktstellen 24. Eine oder mehrere Kontaktstellen 24 können zumindest zum Teil eine oder mehrere Anlageflächen bilden, welche dazu dienen können, die über eine Kontaktstelle 24 hinweg und/oder darüber hinaus miteinander verbundenen Verkleidungsteile 17, 18, 19, 20 gegeneinander auszurichten. Auch können eine oder mehrere Kontaktstellen 24 benachbarter Verbindungsteile 17, 18, 19, 20 zumindest zum Teil scharnierartig ineinandergreifen und dadurch zumindest zum Teil zur Verbindung der Verkleidungsteile 17, 18, 19, 20 beitragen.

Um den sehr hohen Anforderungen im Automobilbereich in Bezug auf die Qualität der Oberflächen von Verkleidungen 16 nachzukommen, kann eines oder mehrere der Verkleidungsteile 17, 18, 19, 20 in Zwei- oder Mehrkomponenten-Spritzgusstechnik mit wenigstens einem beispielsweise hochglänzenden und zumindest eine Außenschicht bildenden Überzug 25 aus Kunststoff versehen sein.

Der Überzug 25 zumindest eines in Zwei- oder Mehrkomponenten-Spritzgusstechnik mit diesem versehenen Verkleidungsteils 17, 18, 19, 20 kann sich bis in die Innenseite des Verkleidungsteils 17, 18, 19, 20 erstrecken.

Um an der mindestens einen Kontaktstelle 24 während des Betriebs des Kraftfahrzeugs z.B. Knarz-, Quietsch- und Mahlgeräusche zu verhindern, ist eine Freilassung zumindest einer wenigstens die mindestens eine Kontaktstelle 24 umfassenden Oberflächenpartie 23 an wenigstens einem der über die Kontaktstelle 24 hinweg und/oder darüber hinaus miteinander verbundenen Verkleidungsteile 17, 18, 19, 20 von dem Überzug 25 vorgesehen.

Ohne die Freilassung der Oberflächenpartie 23 würde es zu der beschriebenen Geräuschentwicklung kommen, die dadurch entsteht, dass z.B. durch Erschütterungen während des Betriebs des Kraftfahrzeugs eine durch den Überzug 25 gebildete und besonders glatte und gegebenenfalls harte Oberfläche gegenüber einer zweiten, gegebenenfalls ebenfalls durch einen Überzug 25 hergestellten Oberfläche mikroskopische und/oder makroskopische Bewegungen ausführt.

Die Erfindung ist insbesondere im Bereich der Herstellung von Außenrückblickspiegelanordnungen für Kraftfahrzeuge gewerblich anwendbar.

### Bezugszeichenliste

- 01: Außenrückblickspiegel
- 02: Außenrückblickspiegelgehäuse
- 03: Grundträger
- 04: Verstellanordnung
- 05: Spiegelglas
- 06: Trägerplatte
- 07: Klebeverbindung
- 08: Öffnung
- 09: Wandung
- 10: Spalt
- 11: Wiederholblinkleuchte
- 12: erstes Gehäuseteil
- 13: zweites Gehäuseteil
- 14: Gehäusepartie
- 15: drittes Gehäuseteil
- 16: Verkleidung
- 17: Verkleidungsteil
- 18: Verkleidungsteil
- 19: Verkleidungsteil
- 20: Verkleidungsteil
- 21: Abdeckung
- 22: Lichtscheibe
- 23: Oberflächenpartie
- 24: Kontaktstelle
- 25: Überzug

- A: Detail
- B: Detail
- F: Fahrtrichtung

## Patentansprüche

1. Verkleidung (16) einer Außenrückblickspiegelanordnung für Kraftfahrzeuge aus mindestens zwei Verkleidungsteilen (17, 18, 19, 20) mit wenigstens einer Kontaktstelle (24) zwischen den Verkleidungsteilen (17, 18, 19, 20), wobei. zumindest ein Verkleidungsteil (17, 18, 19, 20) in Zwei- oder Mehrkomponenten-Spritzgusstechnik mit wenigstens einem zumindest eine Außenschicht bildenden Überzug (25) aus Kunststoff versehen ist,
**gekennzeichnet durch**
eine Freilassung mindestens einer zumindest die wenigstens eine Kontaktstelle (24) umfassenden Oberflächenpartie (23) von dem Überzug (25). aus lichtbeständigem und transparentem Kunststoff, der eine hochglänzende Oberfläche bildet.

2. Verkleidung nach Anspruch 1,
**dadurch gekennzeichnet,**
**dass** der Überzug (25) Polycarbonat und/oder PMMA umfasst.

3. Verkleidung nach einem der vorhergehenden Ansprüche,
**dadurch gekennzeichnet,**
**dass** die mindestens eine Kontaktstelle (24) von einer unverdrehbaren, festen Verbindung und/oder einer gelenkigen Verbindung zwischen wenigstens zwei Verkleidungsteilen (17, 18, 19, 20) umfasst ist.

4. Verkleidung nach Anspruch 3,
**dadurch gekennzeichnet,**
**dass** zumindest eine Verbindung zwischen zwei oder mehreren Verkleidungsteilen (17, 18, 19, 20) eine Rastverbindung umfasst.

5. Verkleidung nach Anspruch 4,
**dadurch gekennzeichnet,**
**dass** sich zumindest eine Kontaktstelle (24) zwischen korrespondierenden Rastelementen der Rastverbindung befindet.

6. Verkleidung nach einem der vorhergehenden Ansprüche,
**dadurch gekennzeichnet,**
**dass** die über die wenigstens eine Kontaktstelle (24) hinweg und/oder darüber hinaus miteinander verbundenen Verkleidungsteile (17, 18, 19, 20) zumindest ein Gehäuseteil (12, 13,15) eines Außenrückblickspiegelgehäuses (02) umfassen.

7. Verkleidung nach einem der vorhergehenden Ansprüche,
**dadurch gekennzeichnet,**
**dass** die über die wenigstens eine Kontaktstelle (24) hinweg und/oder darüber hinaus miteinander verbundenen Verkleidungsteile (17, 18, 19, 20) zumindest ein Abdeckungsteil einer Spiegelfußabdeckung umfassen.

8. Verkleidung nach einem der vorhergehenden Ansprüche,
**dadurch gekennzeichnet,**
**dass** die über die wenigstens eine Kontaktstelle (24) hinweg und/oder darüber hinaus miteinander verbundenen Verkleidungsteile (17, 18, 19, 20) mindestens eine Abdeckung (21) wenigstens einer elektrischen Komponente (11) derAußenrückblickspiegelanordnung umfassen.

9. Verkleidung nach Anspruch 8,
**dadurch gekennzeichnet,**
**dass** die Abdeckung (21) von der elektrischen Komponente (11) umfasst ist.

10. Verkleidung nach Anspruch 9
**dadurch gekennzeichnet,**
**dass** die Abdeckung (21) eine Lichtscheibe (22) umfasst.

11. Verkleidung nach einem der vorhergehenden Ansprüche,
**dadurch gekennzeichnet,**
**dass** die mindestens eine Kontaktstelle (24) wenigstens eine Anlagefläche bildet, eine solche umfasst, oder von einer solchen umfasst wird.

12. Verkleidung nach einem der vorhergehenden Ansprüche,
**dadurch gekennzeichnet,**
**dass** zumindest eine Anlagefläche eineischarnierartige Verbindung zwischen zwei Verkleidungsteilen (17, 18, 19, 20) umfasst, wobei die Verkleidungsteile (17, 18, 19, 20) um eine Scharnierachse aufeinander geklappt sind.

13. Verkleidung nach einem der vorhergehenden Ansprüche,
**dadurch gekennzeichnet,**
**dass** es sich bei den über die wenigstens eine Kontaktstelle (24) hinweg und/oder darüber hinaus miteinander verbundenen Verkleidungsteilen (17, 18, 19, 20) um wenigstens ein Gehäuseteil (12, 13, 15) eines Außenrückblicksplegelgehäuses (02) und um wenigstens ein Abdeckungsteil einer Spiegelfußabdeckung handelt, wobei die beiden Verkleidungsteile (17, 18, 19, 20) um eine Gelenkachse schwenkbar gelenkig miteinander verbunden sind, um welche der Außenrückblickspiegel (01) der Außenrückblickspiegelanordnung gegenüber dem Spiegelfuß aus einer Betriebsstellung in eine Anklappstellung und umgekehrt verschwenkbar ist.

## Claims

1. A cladding (16) of an external rear view mirror assembly for motor vehicles of at least two cladding parts (17, 18, 19, 20) with at least one contact point (24) between the cladding parts (17, 18, 19, 20), wherein at least one cladding part (17, 18, 19, 20) is provided with at least one coating (25) of plastic material forming at least one external layer by applying two- or multi-component injection molding technology,
**characterized by**
excluding from the coating (25) of light-resisting and transparent plastic material forming a high-gloss surface at least one surface section (23) comprising at least the at least one contact point (24).

2. The cladding according to claim 1,
**characterized in that**
the coating (25) comprises polycarbonate and/or PMMA.

3. The cladding according to any one of the preceding claims,
**characterized in that**
the at least one contact point (24) is enclosed by an untwistable, solid connection and/or an articulated connection between at least two cladding parts (17, 18, 19, 20).

4. The cladding according to claim 3,
**characterized in that**
at least one connection between two or multiple cladding parts (17, 18, 19, 20) comprises a snap-lock connection.

5. The cladding according to claim 4,
**characterized in that**
at least one contact point (24) is situated between corresponding snap-lock elements of the snap-lock connection.

6. The cladding according to any one of the preceding claims,
**characterized in that**
the cladding parts (17, 18, 19, 20) connected to one another across the at least one contact point (24) and/or beyond comprise at least one housing part (12, 13, 15) of an external rear view mirror housing (02).

7. The cladding according to any one of the preceding claims,
**characterized in that**
the cladding parts (17, 18, 19, 20) connected to one another across the at least one contact point (24) and/or beyond comprise at least one cover part of a mirror foot cover.

8. The cladding according to any one of the preceding claims,
**characterized in that**
the cladding parts (17, 18, 19, 20) connected to one another across the at least one contact point (24) and/or beyond comprise at least one cover (21) of at least one electrical component (11) of the external rear view mirror assembly.

9. The cladding according to claim 8,
**characterized in that**
the cover (21) is comprised by the electrical component (11).

10. The cladding according to claim 9,
**characterized in that**
the cover (21) comprises a glass panel (22).

11. The cladding according to any one of the preceding claims,
**characterized in that**
the at least one contact point (24) forms at least one contact surface, comprises such or is comprised by such.

12. The cladding according to any one of the preceding claims,
**characterized in that**
at least one contact surface comprises a hinge-like connection between two cladding parts (17, 18, 19, 20), wherein the cladding parts (17, 18, 19, 20) are folded onto one another about a hinge axis.

13. The cladding according to any one of the preceding claims,
**characterized in that**
the cladding parts (17, 18, 19, 20) connected to one another across the at least one contact point (24) and/or beyond are at least one housing part (12, 13, 15) of an external rear view mirror housing (02) and at least one cover part of a mirror foot cover, wherein the two cladding parts (17, 18, 19, 20) are connected in an articulated manner so as to be pivotable about an articulation axis about which the external rear view mirror (01) of the external rear view mirror assembly can be pivoted with respect to the mirror foot from an operating position into a folded-in position and vice versa.

## Revendications

1. Recouvrement (16) d'un agencement de rétroviseur extérieur pour des véhicules à moteur, qui est constitué d'au moins deux parties de recouvrement (17, 18, 19, 20), avec au moins un point de contact (24) entre les parties de recouvrement (17, 18, 19, 20), de telle sorte qu'au moins une des parties de recouvrement (17, 18, 19, 20) est dotée, dans un processus de moulage par injection à deux composants ou plus, d'au moins une couche supérieure extérieure (25) en matière plastique,
**caractérisé en ce que**
est laissée libre au moins une partie de surface supérieure (23) comportant le au moins point de contact (24) à partir de la couche supérieure (25), en matière plastique résistante à la lumière et transparente, qui forme une surface supérieure très brillante.

2. Recouvrement selon la revendication 1, **caractérisé en ce que** la couche supérieure (25) comporte du polycarbonate et/ou du PMMA.

3. Recouvrement selon l'une quelconque des revendications précédentes, **caractérisé en ce que** le au moins un point de contact (24) comporte une liaison sûre et verrouillée et/ou une liaison souple entre au moins deux parties de recouvrement (17, 18, 19, 20)

4. Recouvrement selon la revendication 3, **caractérisé en ce qu'**au moins une liaison entre deux parties de recouvrement (17, 18, 19, 20) ou plus est constituée d'une liaison par encliquetage.

5. Recouvrement selon la revendication 4, **caractérisé en ce que** la liaison par encliquetage se trouve au niveau d'au moins un point de contact (24) entre des éléments encliquetables correspondants.

6. Recouvrement selon l'une quelconque des revendications précédentes, **caractérisé en ce que** les parties de recouvrement (17, 18, 19, 20), reliées ensemble en contact et/ou en chevauchement au niveau du au moins un point de contact (24), comportent au moins une partie de réception (12, 13, 15) d'un boîtier de rétroviseur extérieur (02).

7. Recouvrement selon l'une quelconque des revendications précédentes, **caractérisé en ce que** les parties de recouvrement (17, 18, 19, 20), reliées ensemble en contact et/ou en chevauchement au niveau du au moins un point de contact (24), comportent au moins une partie de couvercle d'un couvercle de pied de rétroviseur.

8. Recouvrement selon l'une quelconque des revendications précédentes, **caractérisé en ce que** les parties de recouvrement (17, 18, 19, 20), reliées ensemble en contact et/ou en chevauchement au niveau du au moins un point de contact (24), comportent au moins un couvercle (21) d'au moins un composant électrique (11) de l'agencement de rétroviseur extérieur.

9. Recouvrement selon la revendication 8, **caractérisé en ce que** le couvercle (21) contient le composant électrique (11).

10. Recouvrement selon la revendication 9, **caractérisé en ce que** le couvercle (21) comporte une lentille de verre transparent (22).

11. Recouvrement selon l'une quelconque des revendications précédentes, **caractérisé en ce que** le au moins un point de contact (24) constitue une surface de contact, comporte une telle surface de contact, ou va être constituée d'une telle surface de contact.

12. Recouvrement selon l'une quelconque des revendications précédentes, **caractérisé en ce que** la au moins une surface de contact constitue une liaison articulée entre deux parties de recouvrement (17, 18, 19, 20), de sorte que les parties de recouvrement (17, 18, 19, 20) sont rabattues l'une sur l'autre autour d'un axe d'articulation.

13. Recouvrement selon l'une quelconque des revendications précédentes, **caractérisé en ce qu'**il s'agit d'au moins deux parties de recouvrement (17, 18, 19, 20), reliées ensemble en contact et/ou en chevauchement au niveau du au moins un point de contact (24), pour au moins une partie de réception (12, 13, 15) d'un boîtier de rétroviseur extérieur (02) et au moins une partie de couvercle d'un couvercle de pied de rétroviseur, de telle sorte que les deux parties de recouvrement (17, 18, 19, 20) sont reliées ensemble de manière souple et orientable autour d'un axe d'articulation, autour duquel le rétroviseur extérieur (01) de l'agencement de rétroviseur extérieur est rentré de manière pivotante contre le pied de rétroviseur depuis une position d'utilisation jusque dans une position repliée.
